# EUROPÄISCHE PATENTSCHRIFT

(11) **EP 2 523 795 B1**
(45) Veröffentlichungstag und Bekanntmachung des Hinweises auf die Patenterteilung: **13.04.2016**
(21) Anmeldenummer: 10799008.7
(22) Anmeldetag: 16.12.2010
(51) Int. Cl.: B29C 45/66, B29C 45/68, B30B 1/14

(54) **KNIEHEBEL-SCHLIESSEINHEIT**
KNEE LEVER CLAMPING UNIT
UNITÉ DE FERMETURE À LEVIER COUDÉ

(30) Priorität: 15.01.2010 DE 102010004677
(43) Veröffentlichungstag der Anmeldung: 21.11.2012
(73) Patentinhaber: KraussMaffei Technologies GmbH, 80997 München (DE)
(72) Erfinder: AMMER, Daniel, 81735 München (DE)
(74) Vertreter: Wilhelm, Ludwig
(86) Internationale Anmeldenummer: PCT/EP2010/069940
(87) Internationale Veröffentlichungsnummer: WO 2011/085901

(56) Entgegenhaltungen:
- EP-A1- 1 586 433
- CA-A1- 2 234 350

## Beschreibung

Die Erfindung betrifft eine Kniehebel-Schließeinheit gemäß dem Oberbegriff von Patentanspruch 1.

Bei Kniehebel-Schließeinheiten wird der Bewegungsablauf "Schließen" und "Öffnen" sowie die formschlüssige Verriegelung nach dem Aufbau der Schließkraft mechanisch bewirkt. Hierzu wird ein mit dem Kniehebelgestänge kraftübertragend in Verbindung stehender Kreuzkopf hydraulisch oder elektromechanisch entlang der Maschinenlängsachse verfahren. Bei elektromechanischen Antrieben wird üblicherweise eine Spindel mittels einer drehangetriebenen Spindelmutter axial verfahren. Die Drehbewegung des Drehantriebs wird also über die Spindel in eine Linearbewegung des Kreuzkopfs umgesetzt (Johannaber, "Kunststoff-Maschinenführer", 4.Ausgabe, 2004 Carl Hanser Verlag München Wien, Kapitel 2.2.2.1).

Aus der EP1586433A1 ist eine Kniehebel-Schließeinheit, gemäß dem Oberbegriff des Anspruchs 1, mit einem Hohlwellenmotor und einem 5-Punkt-Kniehebelgestänge bekannt, wobei der Rotor des Hohlwellenmotors über Stangen mit dem Kreuzkopf des Kniehebelmechanismus antriebstechnisch verbunden ist und der Kreuzkopf drehfest entlang der Maschinenlängsachse verfahrbar ist. Die Drehbewegung des Rotors wird über die Stangen in eine Linearbewegung des Kreuzkopfes umgesetzt.

Nachteilig an den bekannten Kniehebel-Schließeinheiten ist, dass aufgrund des hohen Übersetzungsverhältnisses in der Strecklage der kraftleitenden Hebel ein langer axialer Verfahrweg des Kreuzkopfes erforderlich ist. Der lange Verfahrweg wirkt sich nachteilig im Hinblick auf die charakteristische Trockenlaufzeit aus. Ferner wird die resultierende Gegenkraft in der Regel zentral in die Stützplatte eingeleitet und führt zu deren Durchbiegung. Nur durch einen erhöhten Materialaufwand bei der Gussgestaltung der Stützplatte kann diese Durchbiegung verhindert oder weitestgehend vermieden werden. Ausgehend hiervon liegt der Erfindung die Aufgabe zugrunde, eine Kniehebel-Schließeinheit anzugeben, die sich durch eine verminderte charakteristische Trockenlaufzeit auszeichnet und bei der Einsparungen bei der Gussgestaltung der Stützplatte vorgenommen werden können.

Die Lösung dieser Aufgabe erfolgt durch eine Kniehebel-Schließeinheit mit den Merkmalen von Anspruch 1. Vorteilhafte Ausgestaltungen und Weiterentwicklungen finden sich in den Unteransprüchen.

Dadurch, dass zwischen den oberen und den unteren Kniehebelgestängen ein drehantreibbares und axial entlang der Maschinenlängsachse (L) verschiebliches Element vorgesehen und mit den Kniehebelgestängen kraftübertragend verbunden ist, so dass zum Verfahren der oberen und der unteren Kniehebelgestänge die Rotation des drehangetriebenen Elements vorgesehen ist, ist nur eine geringe Rotationsbewegung des drehangetriebenen Elements erforderlich, um den Kniehebelmechanismus schnell auseinanderzufahren (Zufahren der Schließeinheit) und Schließkraft in der Strecklage aufzubauen. In der Praxis wird man mit Rotationsbewegungen von etwa 90° bis 180° auskommen, d.h. es wird lediglich eine viertel bis maximal eine halbe Umdrehung benötigt. Dadurch wird die charakteristische Trockenlaufzeit minimal. Ein weiterer Vorteil besteht darin, dass die Stützplatte keine axiale Krafteinleitung erfährt, sondern nur eine Momentenabstützung des Drehantriebs erfüllen muss, so dass bei der Gussgestaltung der Stützplatte Einsparungen erfolgen können. Ausserdem muss die Rotationsbewegung des Rotors des Drehantriebs nicht in eine Linearbewegung für das drehbare Element umgesetzt werden. Dies spart Übersetzungsstufen im Getriebe ein; insbesondere kann auf die üblicherweise verwendete Spindel verzichtet werden, die als verschleißanfällig bekannt ist.

Bei dem drehantreibbaren Element kann es sich um den Kreuzkopf des Kniehebelmechanismus handeln. Durch geeignete Verbindungshebel zwischen dem Kreuzkopf und den oberen und unteren Kniehebelgestängen wird die Rotation des Kreuzkopfs in die bekannte Bewegung der Kniehebelgestänge umgesetzt. Je nach Drehrichtung und Anordnung der Verbindungshebel bewirkt eine Rotation in die eine Richtung ein Auseinanderfahren der Kniehebelgestänge, d.h. das "Schließen" der Schließeinheit und eine Rotation zurück in die entgegengesetzte Richtung führt zu einem Zusammenfahren oder Zusammenklappen der Kniehebelgestänge und damit zu einem "Öffnen" der Schließeinheit. Hierzu kann das drehantreibbare Element bzw. der Kreuzkopf zwei einander gegenüberliegende Endstücke aufweisen, die verschiebbar einerseits mit den oberen und andererseits mit den unteren Kniehebelgestängen kraftübertragend verbunden sind. Je nach Ausführungsform können ein oder mehrere Verbindungshebel zwischen dem drehantreibbaren Element bzw. dem Kreuzkopf und den Kniehebelgestängen vorgesehen werden. Eine besonders einfache Ausgestaltung ergibt sich, wenn bei den oberen und bei den unteren Kniehebelgestängen jeweils quer zur Maschinenlängsachse sich erstreckende Traversen vorgesehen sind, die zum Einen fest mit den zu beiden Seiten der Maschinenlängsachse befindlichen Einzelhebeln verbunden sind und zum Anderen kraftübertragend mit dem drehantreibbaren Element bzw. dem Kreuzkopf verbunden sind. Die Rotation des drehantreibbaren Elements oder des Kreuzkopfs wird somit über die Verbindungshebel in eine Auf- und Abbewegung der Traversen und somit in eine Auf- und Abbewegung der mit den Traversen verbundenen Einzelhebel umgesetzt. Die mit der Traverse verbundenen Verbindungshebel sind diesen gegenüber verschieblich ausgebildet. Bei Rotation des drehantreibbaren Elements bzw. des Kreuzkopfs wird der Anlenkpunkt des mit einer Traverse verbundenen Verbindungshebels entlang der Längsachse der Traverse verfahren.

Das drehantreibbare Element kann aber auch der Rotor des Drehantriebs sein, d.h. die oberen und unteren Kniehebelgestänge können über geeignete Verbindungshebel direkt mit dem Rotor des Drehantriebs verbunden sein. In diesem Fall wird also auf den Kreuzkopf verzichtet.

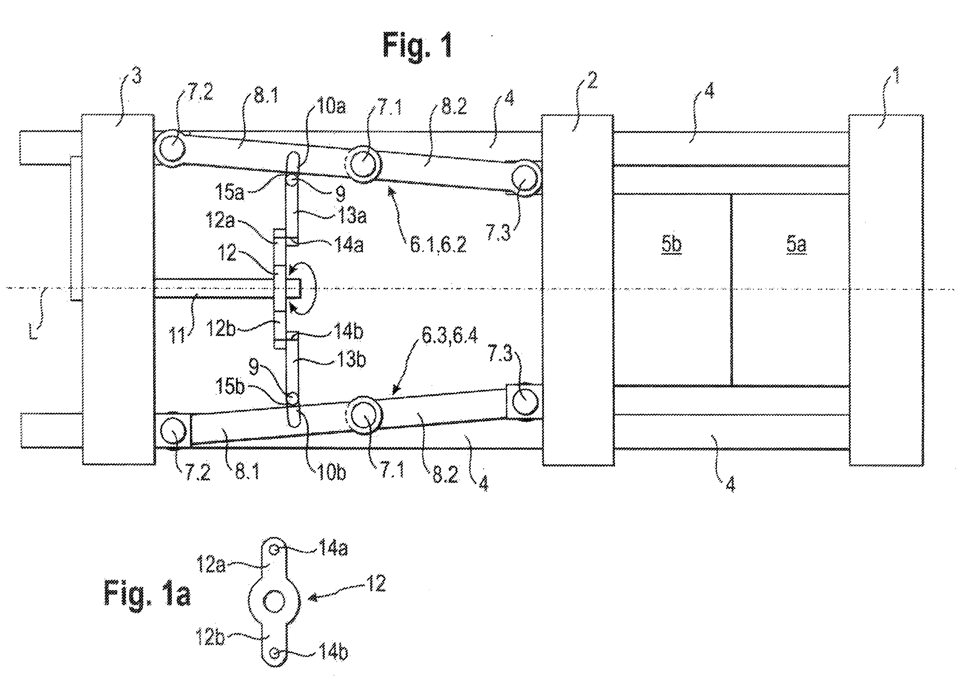

Das Antriebsmoment für die Drehbewegung des drehantreibbaren Elements bzw. des Kreuzkopfs kann auf verschiedene Arten erzeugt werden. Das Antriebsmoment kann direkt oder über mechanische Getriebstufen ausgehend von einem an der Stützplatte befestigten Drehantrieb, beispielsweise ausgehend von einem Elektro- oder einem Hydromotor, erzeugt werden. In diesem Fall ist der Rotor des Drehantriebs in geeigneter Weise antriebstechnisch mit dem drehantreibbaren Element bzw. Kreuzkopf verbunden, beispielsweise über eine Drehwelle mit einer Vielkeilverzahnung. Das Antriebsmoment kann aber auch von einem Linearaktor, beispielsweise einem Hydraulikzylinder, und einem von diesem betätigten Excenter erzeugt werden. Nachfolgend soll die Erfindung anhand von Ausführungsbeispielen und unter Bezugnahme auf die Figuren 1 bis 8 näher erläutert werden. Es zeigen:
- Figur 1: Seitenansicht der Kniehebel-Schließeinheit in geschlossenem Zustand;
- Figur 1a: Draufsicht auf den Kreuzkopf aus Sicht der Stützplatte;
- Figur 2: Seitenansicht der Kniehebel-Schließeinheit in halboffenem bzw. halbgeschlossenem Zustand;
- Figur 3: Seitenansicht der Kniehebel-Schließeinheit in vollständig geöffnetem Zustand;
- Figur 4: perspektivische Darstellung der Kniehebel-Schließeinheit aus Figur 1;
- Figur 5: perspektivische Darstellung der Kniehebel-Schließeinheit aus Figur 2;
- Figur 6: perspektivische Darstellung der Kniehebel-Schließeinheit aus Figur 3;
- Figur 7: Seitenansicht der Kniehebel-Schließeinheit in halboffenem bzw. halbgeschlossenem Zustand mit einem Hohlwellenmotor - erste Variante;
- Figur 8: Seitenansicht der Kniehebel-Schließeinheit in halboffenem bzw. halbgeschlossenem Zustand mit einem Hohlwellenmotor - zweite Variante.

Die in den Figuren 1 bis 3 gezeigte Kniehebel-Schließeinheit umfasst als Hauptbestandteile eine feststehende Formaufspannplatte 1, eine bewegliche Formaufspannplatte 2 sowie eine Stützplatte 3, die über Säulen 4 mit der feststehenden Formaufspannplatte 1 zugfest verbunden ist. Auf den Formaufspannplatten 1, 2 sind Formhälften 5a, 5b befestigt. Zwischen der Stützplatte 3 und der beweglichen Formaufspannplatte 2 ist ein Kniehebelmechanismus für die Verfahrbewegung der beweglichen Formaufspannplatte 2 und zur Erzeugung einer Schließkraft vorgesehen. Der Kniehebelmechanismus ist aus vier identischen, parallel wirkenden Kniehebelgestängen 6.1, 6.2, 6.3, 6.4 aufgebaut, die jeweils paarweise spiegelsymmetrisch zur Maschinenlängsachse L angeordnet sind. Jedes dieser Kniehebelgestänge 6 besteht aus zwei über einen Gelenkpunkt 7.1 miteinander verbundenen Einzelhebeln 8.1 und 8.2, welche einerseits über einen Gelenkpunkt 7.2 mit der Stützplatte 3 und andererseits über einen Gelenkpunkt 7.3 mit der beweglichen Formaufspannplatte 2 verbunden sind. Zwischen den oberen und unteren Einzelhebeln 8.1 sind Verbindungsstangen oder Traversen 10a und 10b vorgesehen, die die Einzelhebel 8.1 jeweils kraftübertragend miteinander verbinden.

Auf der Maschinenlängsachse L ist ein drehantreibbares Element 12 vorgesehen und mit einem hier nicht dargestellten Drehantrieb gekoppelt, so dass es - wie durch den Doppelpfeil in der Figur 1 angedeutet - um die Maschinenlängsachse L hin und her gedreht werden kann. Das drehantreibbare Element 12 entspricht bei üblichen bekannten Kniehebel-Schließeinheiten dem sogenannten Kreuzkopf. Das Element 12 bzw. der Kreuzkopf 12 verfügt über zwei einander gegenüberliegende Endstücke 12a und 12b, die gelenkig mit Verbindungshebeln 13a und 13b verbunden sind. Diese gelenkige Verbindung soll durch die Linien 14a und 14b symbolisiert werden. In der Figur 1 a ist eine Draufsicht auf den Kreuzkopf 12 aus Sicht der Stützplatte 3 gezeigt. Die Verbindungshebel 13a und 13b sind ihrerseits mit den Traversen 10a und 10b gelenkig verbunden, so dass der Kreuzkopf 12 antriebstechnisch mit den oberen und unteren Kniehebelgestängen 6.1 bis 6.4 verbunden ist. Bei Betätigung des Kniehebelmechanismus wird das Element 12 bzw. der Kreuzkopf 12 entlang der Maschinenlängsachse L verfahren und ist daher in geeigneter Weise axial verschieblich auf der Maschinenlängsachse L angeordnet.

Eine Drehung des Kreuzkopfs 12 führt zu einer Vertikalbewegung der Verbindungshebel 13a und 13b sowie der Traversen 10a und 10b. Diese Vertikalbewegung führt je nach Bewegungsrichtung zu einem Einfahren der Kniehebelgestänge 6.1 bis 6.4 in Richtung der Maschinenlängsachse L und damit zu einem Auffahren der Schließeinheit, oder zu einem Ausfahren der Kniehebelgestänge 6.1 bis 6.4 von der Maschinenlängsachse L weg in Richtung der Strecklage des Kniehebelmechanismus und damit zu einem Zufahren der Schließeinheit.

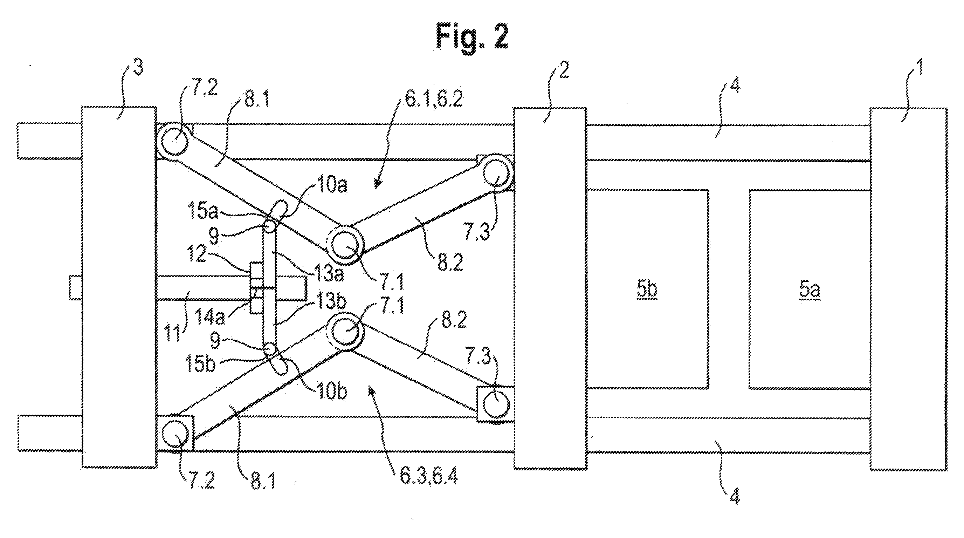

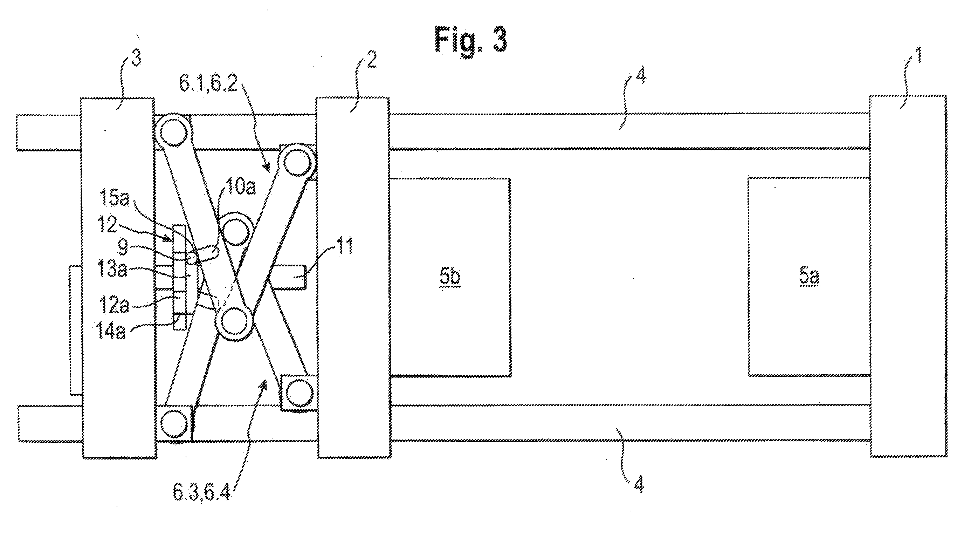

Die Figur 1 zeigt die Schließeinheit in geschlossenem Zustand mit den Kniehebelgestängen 6.1 bis 6.4 in ihrer Strecklage. Durch Rotation des Kreuzkopfs 12 werden der Verbindungshebel 13a nach unten und der Verbindungshebel 13b nach oben bewegt. Dabei werden einerseits die obere Traverse 10a und mit ihr das obere Kniehebelgestänge 6.1 und 6.2 nach unten verfahren, während andererseits die untere Traverse 10b und mit ihr das untere Kniehebelgestänge 6.3 und 6.4 nach oben verfahren werden. Nach einer Rotation des Kreuzkopfs 12 von etwa 90° um die Maschinenlängsachse ist der in der Figur 2 gezeigte Zustand erreicht, bei dem sich die Schließeinheit in halb geöffnetem Zustand befindet. Durch eine weitere Rotation des Kreuzkopfs 12 kann die Schließeinheit in den vollständig geöffneten Zustand gebracht werden, wie er in der Figur 3 gezeigt ist.

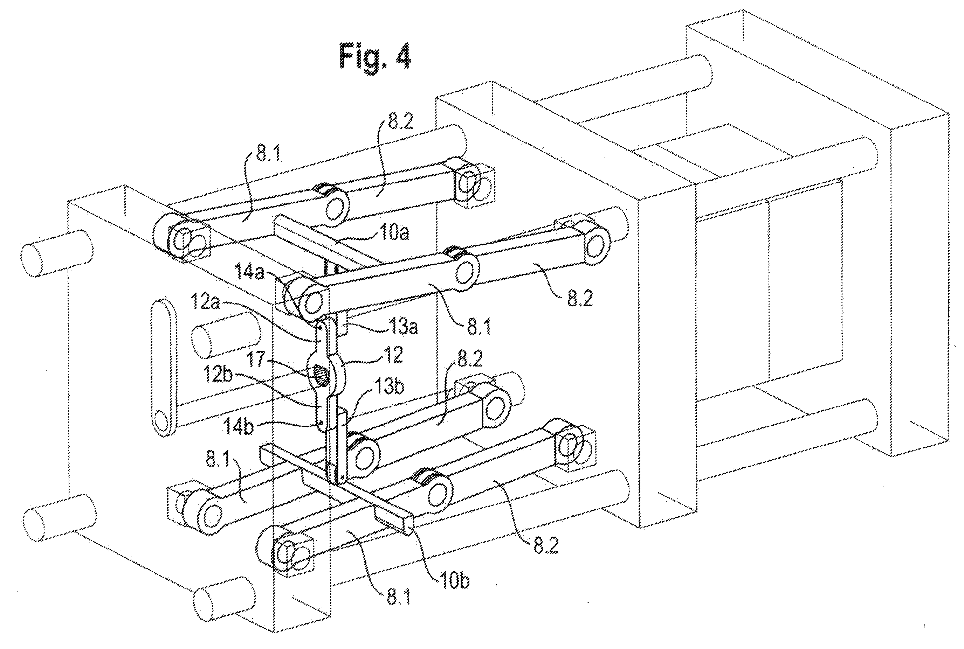

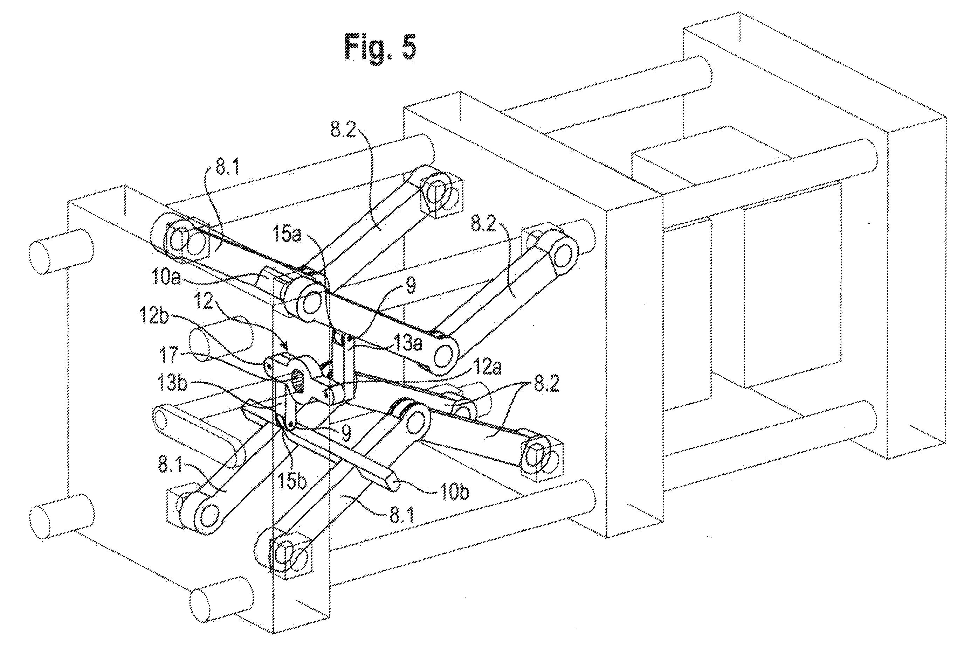

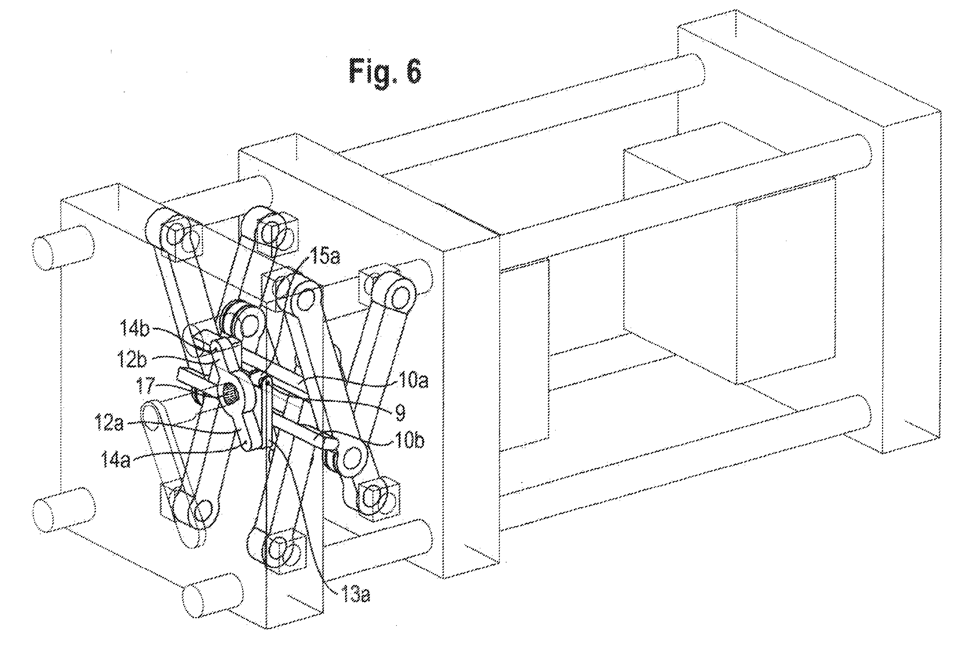

Der Aufbau und die Funktionsweise der erfindungsgemäßen Schließeinheit wird insbesondere im Hinblick auf den drehangetriebenen Kreuzkopf und dessen Verbindung mit den oberen und unteren Kniehebelgestängen durch die perspektivischen Darstellungen in den Figuren 4, 5 und 6 verdeutlicht. Dabei entspricht die Figur 4 der Situation in der Figur 1, die Figur 5 der Situation in der Figur 2 und die Figur 6 schließlich der Situation in der Figur 3.

Je nach Ausgestaltung des Kniehebelmechanismus kann es vorkommen, dass die oberen und die unteren Kniehebelgestänge beim Zusammenklappen, d.h. beim Öffnen der Schließeinheit, aneinander vorbei bewegt werden müssen, wie dies im vorliegenden Beispiel der Fall ist. Um dies zu ermöglichen, sind die oberen und unteren Kniehebelgestänge in geeigneter Weise versetzt zueinander anzuordnen. Die Figuren 4 bis 6 zeigen eine Möglichkeit, dies zu realisieren.

Die Verbindungshebel 13a und 13b liegen in einer Ebene orthogonal zur Maschinenlängsachse L und werden bei Rotation des Kreuzkopfs 12 quer zur Maschinenlängsrichtung L verfahren. Die Verbindung der Verbindungshebel 13a und 13b mit den Traversen 10a und 10b ist daher verschieblich gegenüber den Traversen 10a und 10b ausgebildet.

Falls die Traversen 10a, 10b fest mit den Einzelhebeln 8.1 verbunden sind, verändern sie bei der Bewegung der Kniehebelgestänge ihre Lage im Raum zu der zuvor genannten Ebene und damit ihre Lage in Bezug zu den Verbindungsstangen 13a und 13b. Daher ist eine gelenkige Verbindung zwischen den Verbindungsstangen 13a, 13b und den Traversen 10a, 10b vorgesehen, beispielsweise indem weitere Verbindungshebel 15a und 15b vorgesehen werden, die jeweils mit ihrem einen Ende Gelenkpunkte 9 mit den Verbindungshebeln 13a und 13b aufweisen und mit ihrem anderen Ende verschieblich an den Traversen 10a, 10b befestigt sind.

Wenn die Traversen 10a, 10b hingegen in den Einzelhebeln 8.1 gelenkig befestigt sind, d.h. um ihre Längsachse drehbar gegenüber den Einzelhebeln 8.1 sind, kann auf die weiteren Verbindungshebel 15a und 15b verzichtet werden und die Verbindungshebel 13a und 13b können direkt mit den Traversen 10a, 10b verbunden und entlang von diesen verschieblich sein.

Das Antriebsmoment für die Drehbewegung des Elements 12 bzw. des Kreuzkopfs 12 kann auf verschiedene Arten erzeugt werden. Der Kreuzkopf 12 kann direkt oder über mechanische Getriebestufen ausgehend von einem an der Stützplatte 3 befestigten Drehantrieb, beispielsweise ausgehend von einem Elektro- oder einem Hydromotor, drehangetrieben werden. In diesem Fall ist der Rotor des Drehantriebs in geeigneter Weise antriebstechnisch mit dem Kreuzkopf 12 verbunden.

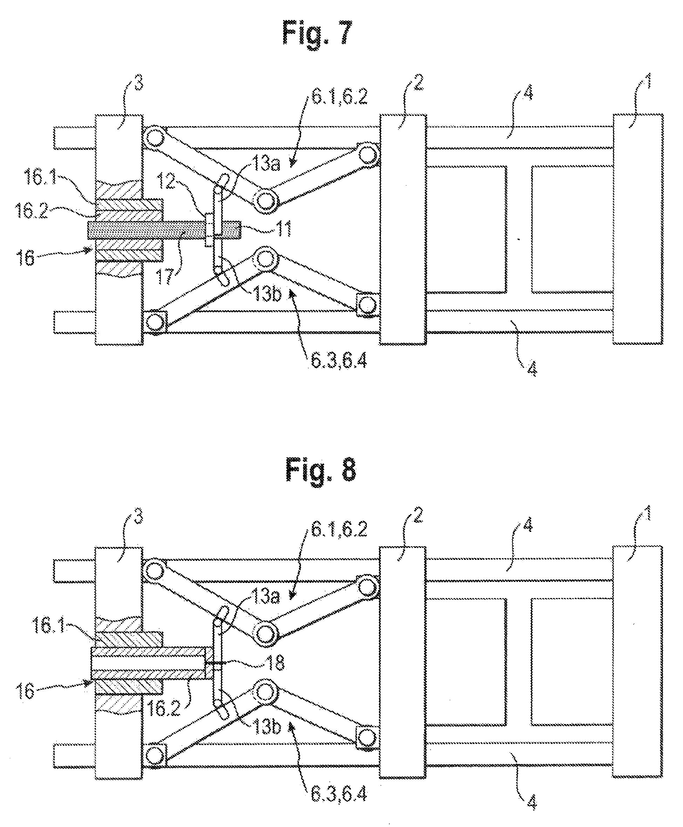

Die Figur 7 zeigt schematisch eine Ausführungsform mit einem Hohlwellenmotor 16 als Drehantrieb. Der Hohlwellenmotor 16 umfasst im wesentlichen den fest mit der Stützplatte 3 verbundenen Stator 16.1 und den darin drehbar angeordneten Rotor 16.2. Die Drehwelle 11 weist eine Vielkeilverzahnung 17 auf, die mit einer entsprechenden Vielkeilverzahnung in dem Rotor 16.2 im Eingriff steht und mit diesem axial unverschieblich verbunden ist. Andererseits steht diese Vielkeilverzahnung 17 mit einer entsprechenden Vielkeilverzahnung 17 im Innern des Kreuzkopfs 12 im Eingriff, und der Kreuzkopf 12 ist axial verschieblich auf der Drehwelle 17 gelagert.

Für die Betätigung der Kniehebelgestänge 6.1 bis 6.4 könnten die Verbindungshebel 13a und 13b grundsätzlich auch direkt an dem Rotor eines Drehantriebs gelenkig befestigt sein. Figur 8 zeigt schematisch eine derartige Anordnung mit einem Hohlwellenmotor 16. Der Hohlwellenmotor 16 umfasst im wesentlichen den fest mit der Stützplatte 3 verbundenen Stator 16.1 und den darin drehbar und axial verschieblich angeordneten Rotor 16.2. Die Verbindungshebel 13a und 13b sind mittels Gelenkbolzen 18 direkt an einer Stirnseite des Rotors 16.2 befestigt. Die Gelenkbolzen 18 sind in Umfangsrichtung gesehen 180° voneinander beabstandet, so dass bei dem Zustand der Schließeinheit gemäß der Figur 8 nur derjenige Gelenkbolzen 18 zu sehen ist, mit dem der Verbindungshebel 13a mit dem Rotor 16.2 verbunden ist. Der zweite Gelenkbolzen 18, mit dem der Verbindungshebel 13b an dem Rotor 16.2 befestigt ist, liegt in Blickrichtung dahinter und ist daher nicht zu sehen. Wie in der Figur 8 weiterhin zu sehen ist, weist der Rotor 16.2 eine größere Länge auf als der Stator 16.1. Die Länge des Stators 16.1 bemisst sich nach dem Verfahrweg, den dieser entlang der Maschinenlängsachse L zurücklegt, wenn die Schließeinheit auf- und zugefahren wird. Sie sollte so bemessen sein, dass der Stator 16.1 in jedem Zustand der Schließeinheit über seine volle Länge von dem Rotor 16.2 durchdrungen wird.

Das Antriebsmoment für den Keuzkopf 12 bzw. das drehangetriebene Element 12 kann auch von einem Linearaktor, beispielsweise einem Hydraulikzylinder, und einem von diesem betätigten Excenter erzeugt werden. Beispielsweise könnte in den Figuren 1 bis 3 die Drehwelle 11 auf der Rückseite der Stützplatte 3 aus dieser ein Stück herausragen und mit einem von dem Linearaktor antreibbaren Excenter in Eingriff stehen, die beide ebenfalls auf der Rückseite der Stützplatte 3 angebracht sind.

### Bezugszeichenliste

- 1: Feststehende Formaufspannplatte
- 2: Bewegliche Formaufspannplatte
- 3: Stützplatte
- 4: Säulen
- 5a: Feststehende Formhälfte
- 5b: Bewegliche Formhälfte
- 6.1, 6.2: Oberes Paar Kniehebelgestänge
- 6.3, 6.4: Unteres Paar Kniehebelgestänge
- 7.1 - 7.3: Gelenkpunkte
- 8.1, 8.2: Einzelhebel
- 9: Gelenkpunkt
- 10a: Obere Traverse
- 10b: Untere Traverse
- 11: Drehwelle
- 12: Drehantreibbares Element bzw. Kreuzkopf
- 12a: Erstes Endstück des Elements 12 bzw. des Kreuzkopfs 12
- 12b: Zweites Endstück des Elements 12 bzw. des Kreuzkopfs 12
- 13a: Verbindungshebel zu oberer Traverse
- 13b: Verbindungshebel zu unterer Traverse
- 14a; 14b: Drehachsen
- 15a: Oberer weiterer Verbindungshebel
- 15b: Unterer weiterer Verbindungshebel
- 16: Hohlwellenmotor
- 16.1: Stator
- 16.2: Rotor
- 17: Vielkeilverzahnung
- 18: Gelenkbolzen

## Patentansprüche

1. Kniehebel-Schließeinheit, insbesondere für eine Spritzgießmaschine, mit einer feststehenden (1) und einer beweglichen Formaufspannplatte (2), mit einer Stützplatte (3) und mit einem Kniehebelmechanismus zwischen der Stützplatte (3) und der beweglichen Formaufspannplatte (2) zum Verfahren der beweglichen Formaufspannplatte (2) sowie zur Erzeugung einer Schließkraft, wobei der Kniehebelmechanismus wenigstens ein oberes (6.1, 6.2) und wenigstens ein unteres kraftleitendes Kniehebelgestänge (6.3, 6.4) aufweist, wobei vorzugsweise oben und unten jeweils ein Paar von Kniehebelgestängen (6.1+6.2; 6.3+6.4) vorgesehen ist, und wobei Mittel zum Verfahren der oberen und der unteren Kniehebelgestänge (6.1, 6.2, 6.3, 6.4) zwischen einem eingeklappten Zustand entsprechend einer Offenstellung der Kniehebel-Schließeinheit und einem gestreckten Zustand entsprechend einer Schließstellung der Kniehebel-Schließeinheit vorgesehen sind,
**dadurch gekennzeichnet, dass**
zwischen den oberen und den unteren Kniehebelgestängen (6.1, 6.2, 6.3, 6.4) ein drehantreibbares und axial entlang der Maschinenlängsachse (L) verschiebliches Element (12) vorgesehen ist, insbesondere ein Kreuzkopf (12), das mit den Kniehebelgestängen (6.1, 6.2, 6.3, 6.4) kraftübertragend verbunden ist, so dass zum Verfahren der oberen und der unteren Kniehebelgestänge (6.1, 6.2, 6.3, 6.4) die Rotation des drehangetriebenen Elements (12) vorgesehen ist.

2. Schließeinheit nach Anspruch 1,
**dadurch gekennzeichnet, dass**
ein oder mehrere Verbindungshebel (13a, 13b, 15a, 15b) zwischen dem drehantreibbaren Element (12) und dem Kniehebelgestänge (6.1, 6.2, 6.3, 6.4) vorgesehen sind.

3. Schließeinheit nach Anspruch 1 oder 2,
**dadurch gekennzeichnet, dass**
das drehantreibbare Element (12) zwei einander gegenüberliegende Endstücke (12a, 12b) aufweist, die verschieblich einerseits mit den oberen (6.1, 6.2) und andererseits mit den unteren Kniehebelgestängen (6.3, 6.4) verbunden sind.

4. Schließeinheit nach einem der vorstehenden Ansprüche,
**dadurch gekennzeichnet, dass**
bei den oberen (6.1, 6.2) und bei den unteren Kniehebelgestängen (6.3, 6.4) jeweils quer zur Maschinenlängsachse (L) sich erstreckende und jeweils zwei Einzelhebel (8.1) miteinander verbindende Traversen (10a, 10b) vorgesehen sind, die kraftübertragend mit dem drehantreibbaren Element (12) verbunden sind.

5. Schließeinheit nach Anspruch 4,
**dadurch gekennzeichnet, dass**
die kraftübertragende Verbindung zwischen einer Traverse (10a, 10b) und dem mit dieser Traverse (10a, 10b) verbundenen Verbindungshebel (15a, 15b) derart ausgebildet ist, dass der Verbindungshebel (15a, 15b) entlang der Längsachse der Traverse verschieblich ist.

6. Schließeinheit nach einem der vorstehenden Ansprüche,
**dadurch gekennzeichnet, dass**
das drehantreibbare Element (12) der Kreuzkopf (12) des Kniehebelmechanismus ist, und dass der Kreuzkopf (12) axial frei beweglich auf einer Drehwelle (11) gelagert ist, welche in der Stützplatte (3) axial fest gelagert ist und mit der Einspritzachse bzw. der Maschinenlängsachse (L) übereinstimmt.

7. Schließeinheit nach Anspruch 6,
**dadurch gekennzeichnet, dass**
ein Elektro- oder ein Hydromotor vorgesehen ist, dessen Rotor (16.2) drehmomentübertragend mit der Drehwelle (11) verbunden ist,

8. Schließeinheit nach Anspruch 6,
**dadurch gekennzeichnet, dass**
ein Linearaktor, beispielsweise ein Hydraulikzylinder, und ein an der Drehwelle (11) angebrachter von dem Linearaktor betätigbarer Excenter vorgesehen ist.

9. Schließeinheit nach einem der Ansprüche 1 bis 5,
**dadurch gekennzeichnet, dass**
ein Drehantrieb (16) vorgesehen ist, dessen Rotor (16.2) das drehantreibbare Element (12) bildet, wobei an der der beweglichen Formaufspannplatte (2) zugewandten Stirnseite des Rotors (16.2) Verbindungshebel (13a, 13b) gelenkig angebracht sind, die kraftübertragend mit den Kniehebelgestängen (16.1, 16.2, 16.3, 16.4) verbunden sind.

10. Schließeinheit nach Anspruch 9,
**dadurch gekennzeichnet, dass**
die axiale Länge des Rotors (16.2) derart bemessen ist, dass unter Berücksichtigung des Verfahrwegs, den der Rotor (16.2) entlang der Maschinenlängsachse L zurücklegt, wenn die Schließeinheit auf- und zugefahren wird, in jedem Zustand der Schließeinheit der Stator (16.1) über seine volle Länge von dem Rotor (16.2) durchdrungen ist.

## Claims

1. A knee lever clamping unit, in particular for an injection moulding machine, having a fixed (1) and a displaceable platen (2), having a support plate (3) and having a knee lever mechanism between the support plate (3) and the displaceable platen (2) for moving the displaceable platen (2) and for generating a closing force, wherein the knee lever mechanism has at least one upper (6.1, 6.2) and at least one lower force guiding knee lever bar (6.3, 6.4), wherein preferably above and below respectively a pair of knee lever bars (6.1+6.2; 6.3+6.4) is provided, and wherein means are provided for displacing the upper and the lower knee lever bars (6.1, 6.2, 6.3, 6.4) between a folded state corresponding to an open position of the knee lever clamping unit and an extended state corresponding to a closed position of the knee lever clamping unit,
**characterized in that**
an element (12), in particular a cross clamp (12), that is rotationally drivable and axially displaceable along the longitudinal machine axis (L), is provided between the upper and lower knee lever bars (6.1, 6.2, 6.3, 6.4), wherein said element is connected to the knee lever bars (6.1, 6.2, 6.3, 6.4) for transmitting force, so that the rotation of the rotationally driven element (12) is provided for displacing the upper and the lower knee lever bars (6.1, 6.2, 6.3, 6.4).

2. The clamping unit according to Claim 1, **characterized in that** one or more connecting levers (13a, 13b, 15a, 15b) are provided between the rotationally drivable element (12) and the knee lever bar (6.1, 6.2, 6.3, 6.4).

3. The clamping unit according to Claim 1 or 2, **characterized in that** the rotationally drivable element (12) has two end pieces (12a, 12b) lying opposite one another, which are connected displaceably on the one hand with the upper (6.1, 6.2) and on the other hand with the lower knee lever bars (6.3, 6.4).

4. The clamping unit according to one of the preceding claims, **characterized in that** in the upper (6.1, 6.2) and in the lower knee lever bars (6.3, 6.4) respectively cross members (10a, 10b) extending transversely to the longitudinal axis (L) of the machine and respectively connecting two individual levers (8.1) with one another, are provided, which are connected in a force-transmitting manner with the rotationally drivable element (12).

5. The clamping unit according to Claim 4, **characterized in that** the force-transmitting connection between a cross member (10a, 10b) and the connecting lever (15a, 15b) connected with this cross member (10a, 10b) is constructed such that the connecting lever (15a, 15b) is displaceable along the longitudinal axis of the cross member.

6. The clamping unit according to one of the preceding claims, **characterized in that** the rotationally drivable element (12) is the cross clamp (12) of the knee lever mechanism, and that the cross clamp (12) is mounted axially freely movably on a rotary shaft (11), which is mounted axially securely in the support plate (3) and coincides with the injection axis or respectively the longitudinal axis (L) of the machine.

7. The clamping unit according to Claim 6, **characterized in that** an electric or a hydraulic motor is provided, the rotor (16.2) of which is connected in a torque-transmitting manner with the rotary shaft (11).

8. The clamping unit according to Claim 6, **characterized in that** a linear actuator, for example a hydraulic cylinder, and an eccentric, arranged on the rotary shaft (11), able to be actuated by the linear actuator, is provided.

9. The clamping unit according to one of Claims 1 to 5, **characterized in that** a rotary drive (16) is provided, the rotor (16.2) of which forms the rotationally drivable element (12), wherein on the face side of the rotor (16.2) facing the displaceable platen (2) connecting levers (13a, 13b) are articulatedly arranged, which are connected in a force-transmitting manner with the knee lever bars (16.1, 16.2, 16.3, 16.4).

10. The clamping unit according to Claim 9, **characterized in that** the axial length of the rotor (16.2) is dimensioned such that taking into consideration the travel path which the rotor (16.2) covers along the longitudinal axis L of the machine, when the clamping unit is opened and closed, in each state of the clamping unit the stator (16.1) is penetrated over its entire length by the rotor (16.2).

## Revendications

1. Unité de fermeture à genouillère, en particulier pour une machine de moulage par injection, comprenant une plaque de serrage de moule fixe (1) et mobile (2), comprenant une plaque d'appui (3) et un mécanisme de genouillère entre la plaque d'appui (3) et la plaque de serrage de moule mobile (2) pour déplacer la plaque de serrage de moule mobile (2) ainsi que pour produire une force de fermeture, sachant que le mécanisme de genouillère présente au moins une tringle de genouillère supérieure (6.1, 6.2) et au moins une tringle de genouillère inférieure (6.3, 6.4) motrice, sachant que de préférence, une paire de tringles de genouillère (6.1 + 6.2 ; 6.3 + 6.4) respectives est prévue en haut et en bas, et sachant que des moyens pour déplacer les tringles de genouillère (6.1, 6.2, 6.3, 6.4) supérieures et inférieures entre un état replié correspondant à une position ouverte de l'unité de fermeture à genouillère et un état déployé correspondant à une position fermée de l'unité de fermeture à genouillère sont prévus,
**caractérisée en ce qu'**un élément (12) pouvant être entraîné en rotation et mobile axialement le long de l'axe longitudinal de la machine (L) est prévu entre les tringles de genouillère (6.1, 6.2, 6.3, 6.4) supérieures et inférieures, en particulier une tête croisée (12) qui est reliée en transmission de force aux tringles de genouillère (6.1, 6.2, 6.3, 6.4), de sorte que pour déplacer les tringles de genouillère (6.1, 6.2, 6.3, 6.4) supérieures et inférieures, la rotation de l'élément pouvant être entraîné en rotation (12) est prévue.

2. Unité de fermeture selon la revendication 1, **caractérisée en ce qu'**un ou plusieurs levier(s) de liaison (13a, 13b, 15a, 15b) est/sont prévu(s) entre l'élément pouvant être entraîné en rotation (12) et les tringles de genouillère (6.1, 6.2, 6.3, 6.4).

3. Unité de fermeture selon la revendication 1 ou 2, **caractérisée en ce que** l'élément pouvant être entraîné en rotation (12) présente deux pièces d'extrémité (12a, 12b) opposées l'une à l'autre qui sont reliées de façon mobile à la tringle de genouillère supérieure (6.1, 6.2) d'une part et à la tringle de genouillère inférieure (6.3, 6.4) d'autre part.

4. Unité de fermeture selon l'une des revendications précédentes, **caractérisée en ce que** des traverses (10a, 10b) se déployant respectivement transversalement à l'axe longitudinal de la machine (L) et reliant respectivement entre eux deux leviers individuels (8.1) sont prévues sur la tringle de genouillère supérieure (6.1, 6.2) et la tringle de genouillère inférieure (6.3, 6.4), et sont reliées en transmission de force avec l'élément pouvant être entraîné en rotation (12).

5. Unité de fermeture selon la revendication 4, **caractérisée en ce que** la liaison en transmission de force entre une traverse (10a, 10b) et le levier de liaison (15a, 15b) relié à cette traverse (10a, 10b) est ainsi formée que le levier de liaison (15a, 15b) est mobile le long de l'axe longitudinal de la traverse.

6. Unité de fermeture selon l'une des revendications précédentes, **caractérisée en ce que** l'élément pouvant être entraîné en rotation (12) est la tête croisée (12) du mécanisme de genouillère et que la tête croisée (12) est disposée en étant mobile librement axialement sur un arbre rotatif (11) qui est placé de façon fixe axialement dans la plaque d'appui (3) et qui coïncide avec l'axe d'injection, respectivement l'axe longitudinal de la machine (L).

7. Unité de fermeture selon la revendication 6, **caractérisée en ce qu'**un moteur électrique ou hydraulique est prévu, dont le rotor (16.2) est relié en transmission de couple de rotation à l'arbre rotatif (11).

8. Unité de fermeture selon la revendication 6, **caractérisée en ce qu'**un actionneur linéaire, par exemple un cylindre hydraulique, et un excentrique placé sur l'arbre rotatif (11) et pouvant être actionné avec l'actionneur linéaire est prévu.

9. Unité de fermeture selon l'une des revendications 1 à 5, **caractérisée en ce qu'**un entraînement rotatif (16) est prévu dont le rotor (16.2) forme l'élément pouvant être entraîné en rotation (12), sachant que sur la face avant du rotor (16.2) tournée vers la plaque de serrage de moule mobile (2), des leviers de liaison (13a, 13b) sont placés en articulation, qui sont reliés en transmission de force avec les tringles de genouillère (16.1, 16.2, 16.3, 16.4).

10. Unité de fermeture selon la revendication 9, **caractérisée en ce que** la longueur axiale du rotor (16.2) est ainsi mesurée qu'en tenant compte du trajet de déplacement que le rotor (16.2) effectue le long de l'axe longitudinal de la machine (L), lorsque l'unité de fermeture est avancée et fermée, le stator (16.1) est traversé par le rotor (16.2) sur toute sa longueur dans chaque état de l'unité de fermeture.
